Europäisches Patentamt

European Patent Office

Office européen des brevets

(11) Publication number: **0 015 657**
**B1**

(12) EUROPEAN PATENT SPECIFICATION

(45) Date of publication of patent specification: **16.05.84**

(51) Int. Cl.³: **G 02 B 7/26**

(21) Application number: **80300395.3**

(22) Date of filing: **12.02.80**

(54) Optical fibre connector.

(30) Priority: **26.02.79 US 15265**

(43) Date of publication of application:
**17.09.80 Bulletin 80/19**

(45) Publication of the grant of the patent:
**16.05.84 Bulletin 84/20**

(84) Designated Contracting States:
**AT BE CH DE FR GB IT NL SE**

(56) References cited:
**FR-A-2 389 148**
**FR-A-2 390 745**
**JP-A-54 005 746**
**JP-A-54 021 356**

**Patents Abstracts of Japan Vol. 3, No. 28, 9
March 1979, page 15 E96**
**Patents Abstracts of Japan Vol. 3, No. 41, 10
April 1979, page 130 E103**

(73) Proprietor: **AMP INCORPORATED**
**P.O. Box 3608 449 Eisenhower Boulevard**
**Harrisburg Pennsylvania 17105 (US)**

(72) Inventor: **Johnson, Tore Rudolph**
**2412 Jericho Drive**
**Harrisburg Pennsylvania (US)**

(74) Representative: **Gray, Robin Oliver et al**
**BARON & WARREN 18 South End Kensington**
**London W8 5BU (GB)**

Courier Press, Leamington Spa, England.

## Description

The invention relates to an optical fibre connector of the kind in which an optical fibre is located in an interstitial space defined between a plurality of surfaces.

Such a connector is disclosed in United States patent No. 4,087,155 in which the surfaces are defined by adjacent spheres. Two connectors are disposed mutually adjacent in a common sleeve in an attempt axially to align the optical fibres.

In such a connector difficulties may arise in accurately mounting the optical fibres in the interstitial spaces as of variations in optical fibre diameters and in connecting the fibres in precise axial alignment. In addition the connector has many separate parts with increased manufacturing costs.

A fibre optic connector is disclosed in JP—A—5421356 which is adapted to mate with another similar connector to align the ends of a pair of optical fibres, the connector having an interstitial space for receiving an optical fibre defined between first and second flat alignment surfaces of a one-piece body member convergent laterally of the mating direction at an acute angle, and having a forward extension bordering, and forming an extension of, the interstitial space of the other connector whereby the extension of each connector confines the fibre of the other connector in its interstitial space.

Such a connector is of relatively simple structure and it is an object to present an improved connector of this simpler structure.

Accordingly the present invention is characterised in that the forward extension is arranged on a body portion of the member on which the first flat alignment surface is formed so as to extend beyond a forward end of the second flat alignment surface, said forward extension being adapted to engage the second alignment surface of the other connector on mating engagement so that the second alignment surfaces of both connectors are in coplanar relation on mating engagement the first alignment surface having an integral surface portion extending in rectilinear fashion on the forward extension, to coact on mating engagement with the first and second alignment surfaces of the other connector, to define a triangular interstitial space embracing the optical fibre of the other connector, resilient means on the connector being arranged to engage the other connector to bias the extended surface portion of the extension of the other connector towards the first alignment surface of the connector, clampingly to engage the space defined between the first and second alignment surfaces of the connector and the extended surface portion of the extension of the other connector, the first alignment surface being formed at a recess in the body portion rearwardly of the extended surface portion so that said alignment surface is of less width than that of the extended surface portion of the extension, the arrangement being such that, during mating with the other similar connector, the extended surface portions of the connectors will be in sliding engagement at border portions to maintain the extended surface portions spaced apart from the optical fibres for substantially the entire longitudinal mating movement, until the extended surface portions enter the recesses at the alignment surfaces of the connectors.

The biasing of the surface portions of the extensions into the interstitial spaces defined by the first and second alignment surfaces of the complementary connectors results in variation of the triangular sections of the interstitial spaces, within limits, to accommodate optical fibres of diameters differing within a limited tolerance range. Also, by maintaining the extended surface portions spaced the optical fibres for substantially the entire longitudinal mating movement, axial disturbance of the fibres is avoided.

A specific example of an optical fibre connector according to the invention will now be described with reference to the accompanying drawings in which:—

Figure 1 is an exploded perspective view of two connectors according to the invention, aligned for mating;

Figure 2 is an exploded perspective view of a connector shown in Figure 1 with an optical fibre located therein and an optical fibre positioning gauge;

Figure 3 is a plan view of the connector with the positioning gauge shown in Figure 2 mounted thereon;

Figure 4 is a perspective view of the connector terminating an optical fibre;

Figure 5 is a plan view of two connectors aligned for mating;

Figure 6 is a cross-sectional view taken along lines 6—6 of Figure 5;

Figure 7 is a plan view of two connectors fully mated;

Figure 8 is a cross-sectional view taken along lines 8—8 of Figure 7; and

Figure 9 is a cross-sectional view taken along lines 9—9 of Figure 7.

As the two connectors 12, 14 respectively, are identical, for convenience, in the description like reference numerals will be used for like parts.

Each connector comprises a body member 16, a clamping member 18, and a strain relief member 20, e    member being moulded in one piece from      able plastics material.

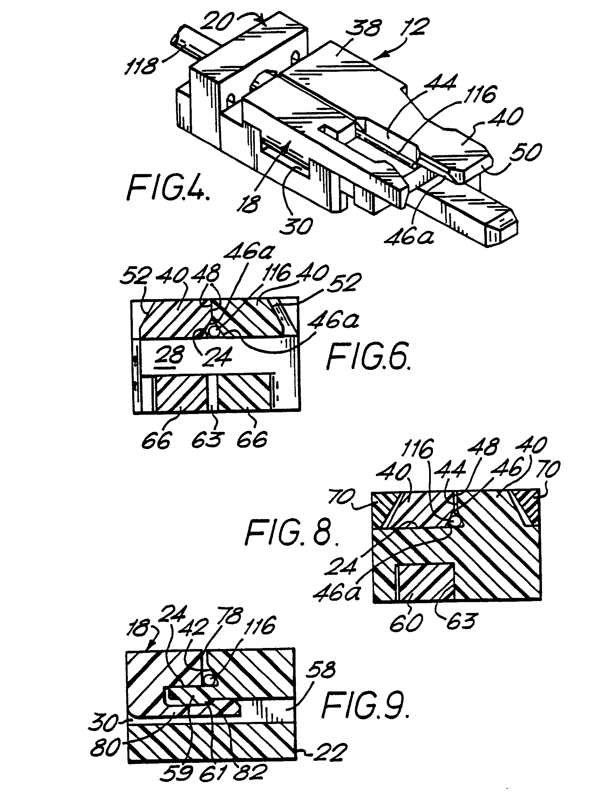

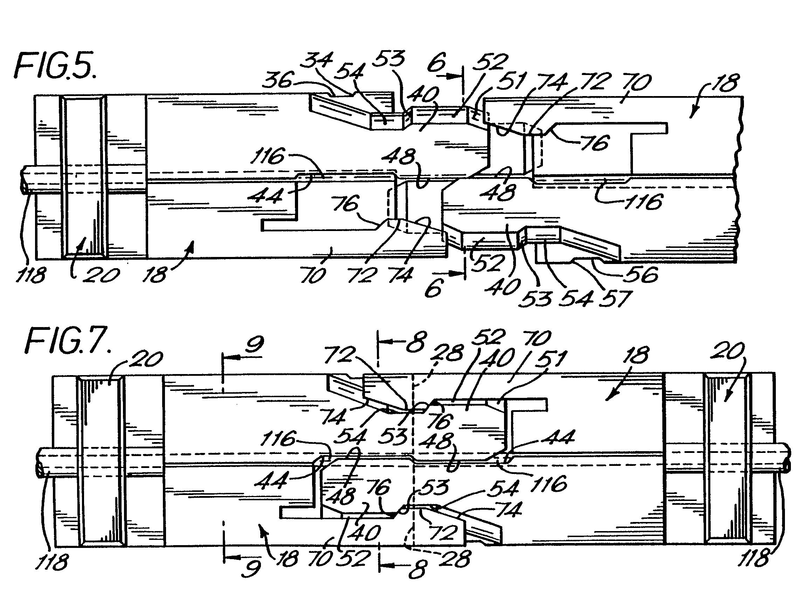

Each body r    ber 16 is substantially rigid and comprise:   base 22 having an upper surface 24 ex     ling between a rear end 26 and a front er    3, and having opposite sides 32 and 33. A    cess 30 is formed in the base opening to the upper surface and one side 32 intermediate the ends 26 and 28, and communicating with a socket forming passageway 58 (Figure 9) extending transversely through the base and opening to the side 33. A longitudinally extending rib 59 is formed on an upper wall of the passageway 58 and has a ramp-form locking shoulder 61 facing away from the recess 30. A locking recess 36 having a bevelled locking shoulder 34 is formed in a portion of the side 32, which portion is of reduced section and located forwardly of recess 30.

A longitudinally extending alignment block 38 is formed on the base and has an upper alignment arm 40 projecting beyond the forward end 28. A longitudinally extending inner side of the alignment block 38 is undercut to provide a flat first optical fibre core supporting surface 42 defining an acute angle with the upper surface 24 of the base, the latter surface providing a second optical fibre core supporting surface. The inner side is rebated adjacent the arm to provide an intermediate, diagonally recessed, portion 44 intersecting a rectilinear extension 46 of surface 42 which extends to a front end of alignment arm 40 (the forward surface portion of rectilinear extension 46 which extends on the alignment arm 40 being designated under the reference number "46a" in the following description). The extension 46 of surface 42 and the adjacent portion of the upper surface 24, provide two optical fibre alignment surfaces.

The alignment arm 40 has an inwardly facing, longitudinally extending, guide surface 48, a bevelled nose portion 50, an outwardly facing nose surface 51, and a camming surface 52 inclined at an obtuse angle to the plane of the surface 24. A locking shoulder 53 and a locking recess 54 are formed in the alignment arm 40, at a location rearward of surface 52, and a locking recess 56 and locking shoulder 57 are formed in the base 22 transversely aligned with the locking recess 36 at the opposite side of the base 22.

A lower alignment arm 60 extends forwardly from a lower side of the base 22 parallel with and spaced apart from the upper alignment arm 40 and has a chamfered nose 62. A channel 63 is formed between the side 32 of the base and a side of the root end of arm 60.

The rear of each body member 16 is formed with a fibre supporting portion 64 having a central neck 66 formed with an upper ridged surface 67 recessed below the plane of upper surface 24 a distance equal to the thickness of the optical fibre cladding.

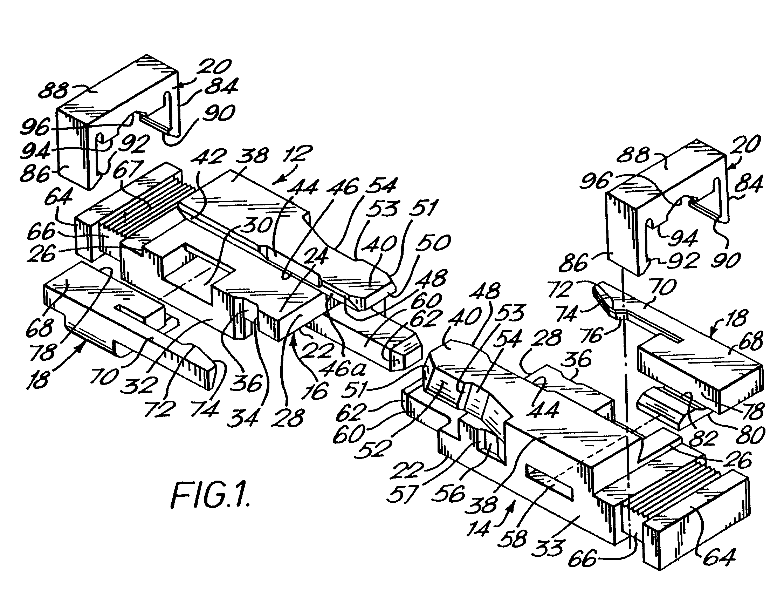

Each clamping member 18 comprises a body portion 68 having a cantilever spring arm 70 extending forwardly from one side and formed with a latching projection 72 at its free end, which projection has an oppositely facing camming surface and latching shoulder 74 and 76, respectively. The opposite side of the clamping member 18 defines a longitudinally extending third optical fibre supporting surface 78 (Figures 1 and 9). A cantilevered tab 80 extends laterally from the body portion 68 and is provided at its free end with a locking lip having an inwardly directed locking ramp 82.

The strain relief member 20, comprises a generally U-shaped body having two spaced legs 84, 86, depending from opposite ends of a transverse portion 88, and having inwardly directed latching flanges 90, 92, at respective free ends. An inner surface 94 of the transverse portion 88 is formed with an optical fibre receiving groove 96.

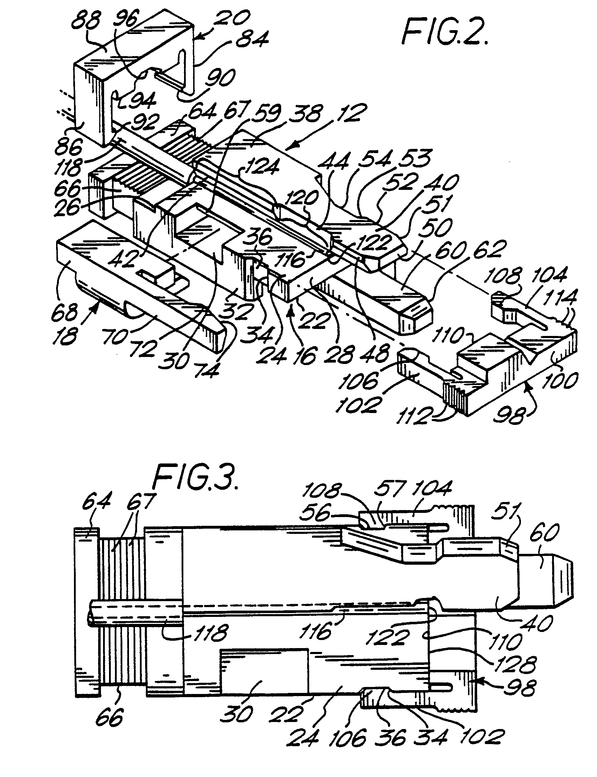

Referring now particularly to Figures 2 and 3, an optical fibre end positioning gauge 98 comprises a transverse portion 100 from opposite ends of which extend two parallel latching legs 102, 104 having latching projections 106, 108, respectively, at their free ends. The transverse portion 100 provides an inwardly facing, flat, reference surface 110. Serrations 112, 114 are formed on the root ends of the legs to facilitate manual handling.

In assembling the connectors, an optical fibre 116 having cladding 118 which has been removed to expose a precise length of fibre core comprising an anterior section 120, adjacent an optically polished face 122, and a posterior section 124, is located on the body with the posterior core section 124 abutting the first supporting surface 42 and the second supporting surface 24. The anterior core section is laterally supported by the rectilinear extension 46 of surface 42, and a forward portion of surface 24 while the cladded portions extends across surface 67.

The gauge 98 is moved from the position of Figure 2 to the position of Figure 3, between alignment arms 40 and 60 with the leg members 102, 104 on opposite sides of the base 22 and projections 106, 108 snapping into the first and second recesses 36, 56 respectively, detachably to lock the gauge 98 and the base 22 together, with the reference surface 110 abutting the front end 28 of the base. A raised stop portion of the reference surface abuts the optical face 122 of the fibre core to ensure that it is coplanar with end 28.

It will readily be appreciated that by using a reference surface of a different configuration the optical face of the fibre core may be located at a predetermined distance behind or in front of the end 28 to achieve optimum spacing between the optical faces when the connectors are mated.

The clamping member 18 is mounted on the base 22 by inserting the tab 80 laterally into passageway 58 until the complementary ramp surfaces 61 and 82 are in locking engagement, the lateral movement causing the third optical fibre supporting surface 78 to wedge the posterior section 124 of the fibre core between the first optical fibre supporting surface 42, and the second optical fibre supporting surface 24, as shown in Figure 9.

The complementary configurations of the ramp surfaces 61, 82 together with the resiliency of the tab 80 enable the passageway defined between the three supporting surfaces to be of varying cross-sectional size to accommodate optical fibres having a limited range of diameters, or to accommodate variations in the diameter of a given optical fibre caused by manufacturing tolerances.

After the optical fibre has been so clamped, the gauge 98 is removed from the body member 16 and the strain relief member 20 is snap-fitted on the rearward portion 64 of the body member 16 with the optical fibre pressed against the ridged surface 67 by the groove 96.

As shown particularly in Figures 5 and 6, two connectors are mated by moving them axially together to bring the camming surface 74 of one connector's clamping member into sliding engagement with the other connector's nose surface 51, together with sliding engagement of both connectors, guide surfaces 48. At this stage both connectors and optical fibres are slightly laterally misaligned. On moving the connectors further together from the position of Figure 6, each optical fibre will be substantially enclosed by an oversize triangle of surfaces protecting the optical fibre during mating. The surface portion 46a of the connector 14 will be spaced from the optical fibre in the connector 12 for substantially the entire mating movement avoiding abrasion of the optical fibre.

Such further movement together of the connectors causes resilient flexure of arms 70 bringing complementary camming surfaces 52 and 74 into engagement providing laterally inward and downward force components assisting in retaining the connectors in alignment. At this stage, the lower alignment arms 60 are in mutual sliding engagement in channels 63 further assisting in retaining the connectors in correct alignment during mating.

Further axial movement of the connectors together causes the engagement of projections 72 and surfaces 53 where the resiliency of the arms 70 moves the alignment arms 40 laterally inwardly towards each other until the surface portions 46a adjacent the leading ends of the arms engage the anterior lengths of optical fibre core clamping them against the surfaces 24 and the portions of surfaces 46 of reduced height thereby fixing the optical fibre cores in precise axial alignment.

In the fully mated condition, the projections 72 releasably latch in the recesses 54, as shown in Figure 7 and the ends 28 of the body members are retained abutting against each other by residual resiliency in the arms 70.

It should be noted that, each alignment surface 46 engages both fibre cores assisting in maintaining precise axial alignment of the cores while the connectors are clamped with any desired optimum spacing between optical faces 122 of the optical fibres using the gauge.

## Claims

1. An optical fibre connector (12) adapted to mate with another similar connector (14) to align the ends (120) of a pair of optical fibres (116), the connector (12) having an interstitial space for receiving an optical fibre defined between first and second flat alignment surfaces (46, 24) of a one-piece body member (16) convergent laterally of the mating direction at an acute angle, and having a forward extension (40) bordering and forming an extension of the interstitial space, the extension being arranged to overlap the fibre receiving interstitial space of the other connector (14) whereby the extension of each connector confines the fibre of the other connector in its interstitial space, characterised in that the forward extension (40) is arranged on a body portion (38) of the member (16) on which the first flat alignment surface (46) is formed so as to extend beyond a forward end of the second flat alignment surface (24), said forward extension (40) being adapted to engage the second alignment surface (24) of the other connector (14) on mating engagement so that the second alignment surfaces (24) of both connectors (12, 14) are in coplanar relation on mating engagement, the first alignment surface (46) having an integral surface portion (46a) extending in rectilinear fashion on the forward extension (40) to coact on mating engagement with the first and second alignment surfaces (46, 24) of the other connector (14) to define a triangular interstitial space embracing the optical fibre of the other connector, resilient means (70) on the connector (12) being arranged to engage the other connector (14) to bias the extended surface portion (46a) of the extension (40) of the other connector (14) towards the first alignment surface (46) of the connector (12) clampingly to engage the optical fibre in the triangular interstitial space defined between the first and second alignment surfaces (24, 46) of the connector (12) and the extended surface portion (46a) of the extension (40) of the other connector (14), the first alignment surface (46) being formed at a recess (44) in the body portion (38) rearwardly of the extended surface portion (46a) so that said alignment surface (46) is of less width than that of the extended surface portions (46a) of the extension (40), the arrangement being such that, during mating with the other similar connector (14) the extended surface portions (46a) of the connectors will be in sliding engagement at border portions to maintain the extended surface portions (46a) spaced apart from the optical fibres (116) for substantially the entire longitudinal mating movement, until the extended surface portions (46a) enter the recesses (44) at the alignment surfaces (46) of the connectors.

2. An optical fibre connector according to Claim 1, characterised in that said connector (12) additionally comprises three converging surfaces (42, 24, 78) defining between them an optical fibre receiving passageway rearwardly of the alignment surfaces (46, 24) which are integral rectilinear extensions of two of the surfaces (42, 24) defining the passageway.

3. An optical fibre connector according to Claim 2, characterised in that one (78) of the three converging surfaces (42, 24, 78) defining the optical fibre receiving passageway is provided on a clamping member (18) mounted on the body member (16) for limited lateral movement of the one converging surface (78) relative to the other two converging surfaces (42, 24) to alter the cross-sectional size of the passageway.

4. An optical fibre connector according to any one of the preceding claims, characterised in that the resilient means (70) comprises a resilient arm (70) extending from the body portion (16) in the longitudinal direction spaced laterally from the alignment surfaces (46, 24) and extending forwardly of the alignment surface (24), the arm (70) having camming means (74) engageable with a complementary surface (52) on the forward extension (40) of the other connector (14) during mating to urge the other connector (14) laterally to bring the extended surface portions (46a) of extension (40) into engagement with the optical fibres (116) at least at the end of the longitudinal mating movement, precisely to align the axes of the optical fibres (116).

## Revendications

1. Connecteur (12) de fibre optique conçu pour s'accoupler avec un autre connecteur similaire (14) afin d'aligner les extrémités (120) d'une paire de fibres optiques (116), le connecteur (12) présentant un espace interstitiel destiné à recevoir une fibre optique, défini entre des première et seconde surfaces plates d'alignement (46, 24) d'un élément de corps (16) d'une seule pièce, convergeant latéralement à la direction d'accouplement, sous un angle aigu, et ayant un prolongement avant (40) bordant et formant un prolongement de l'espace interstitiel, le prolongement étant agencé pour chevaucher l'espace interstitial de réception de fibre de l'autre connecteur (14) de manièr que le prolongement de chaque connecteur maintienne la fibre de l'autre connecteur dans son espace interstitiel, caractérisé en ce que le prolongement avant (40) est agencé sur une partie de corps (38) de l'élément (16) sur laquelle la première surface plate (46) d'alignement est formée afin de dépasser au-delà d'une extrémité avant de la seconde surface plate (24) d'alignement, ledit prolongement avant (40) étant conçu pour porter contre la seconde surface (24) d'alignement de l'autre connecteur (14) lors de l'accouplement afin que les secondes surfaces d'alignement (24) des deux connecteurs (12, 14) soient dans une disposition coplanaire lors de l'accouplement, la première surface (46) d'alignement étant réalisée d'une seule pièce avec une partie de surface (46a) s'étendant de façon rectiligne sur le prolongement avant (40) afin de coopérer lors de l'accouplement avec les première et seconde surfaces d'alignement (46, 24) de l'autre connecteur (14) pour définir un espace interstitiel triangulaire entourant la fibre optique de l'autre connecteur, des moyens élastiques (70) du connecteur (12) étant agencés pour porter contre l'autre connecteur (14) afin de solliciter la partie de surface dépassante (46a) du prolongement (40) de l'autre connecteur (14) vers la première surface d'alignement (46) du connecteur (12) pour que la fibre optique soit prise et serrée dans l'espace interstitiel triangulaire défini entre les première et seconde surfaces d'alignement (24, 46) du connecteur (12) et la partie de surface dépassante (46a) du prolongement (40) de l'autre connecteur (14), la première surface d'alignement (46) étant formée dans un évidement (44) dans la partie de corps (38) en arrière de la partie de surface dépassante (46a) de manière que ladite surface d'alignement (46) soit d'une largeur inférieure à celle de la partie de surface dipassante (46a) du prolongement (40), l'agencement étant tel que, pendant l'accouplement avec l'autre connecteur similaire (14), les parties de surface dépassantes (46a) des connecteurs sont en contact de glissement par des bords pour maintenir les parties de surfaces dépassantes (46a) espacées des fibres optiques (116) pendant pratiquement la totalité du mouvement longitudinal d'accouplement, jusqu'à ce que les parties de surfaces dépassantes (46a) pénètrent dans les évidements (44) des surfaces d'alignement (46) des connecteurs.

2. Connecteur de fibre optique selon la revendication 1, caractérisé en ce que ledit connecteur (12) présente en outre trois surfaces convergentes (42, 24, 78) définissant entre elles un couloir de réception d'une fibre optique en arrière des surfaces d'alignement (46, 24) qui sont des prolongements rectilignes intégraux de deux des surfaces (42, 24) définissant le couloir.

3. Connecteur de fibre optique selon la revendication 2, caractérisé en ce qu'une (78) des trois surfaces convergentes (42, 24, 78) définissant le couloir de réception d'une fibre optique est située sur un élément de serrage (18) monté sur l'élément de corps (16) afin de limiter le mouvement latéral de la surface convergente (78) par rapport aux deux autres surfaces convergentes (42, 24), pour modifier la dimension en section du couloir.

4. Connecteur de fibre optique selon l'une quelconque des revendications précédentes, caractérisé en ce que les moyens élastiques (70) comprennent un bras élastique (70) dépassant de la partie de corps (16) dans la direction longitudinale, espacé latéralement des surfaces d'alignement (46, 24) et s'étendant vers l'avant de la surface d'alignement (24, le bras (70) comportant un moyen de came (74) pouvant porter contre une surface complémentaire (52) située sur le prolongement avant (40) de l'autre connecteur (14) pendant l'accouplement afin de pousser l'autre connecteur (14) latéralement pour amener les parties de surfaces dépassantes (46a) du prolongement (40) en contact avec les fibres optiques (116) au moins à la fin du mouvement longitudinal d'accouplement de façon à aligner avec précision les axes des fibres optiques (116).

## Patentansprüche

1. Verbinder (12) für eine optische Faser, der zum Zusammenstecken mit einem weiteren gleichen Verbinder (14) ausgebildet ist, um die Enden (120) eines Paars optischer Fasern (116) zueinander auszurichten, wobei der Verbinder (12) einen Zwischenraum zur Aufnahme einer optischen Faser aufweist, der zwischen ersten und zweiten flachen Ausrichtflächen (46, 24) eines einstückigen Körperelements (16) begrenzt ist und seitlich zur Steckrichtung in einem spitzen Winkel konvergiert, sowie eine vordere Verlängerung (40), welche den Zwischenraum begrenzt und eine Verlängerung des Zwischenraums bildet, wobei ferner diese Verlängerung derart ausgebildet und angeordnet ist, daß sie den die Faser aufnehmenden Zwischenraum des anderen Verbinders (14) überlappt, wodurch die Verlängerung jedes Verbinders die Faser des anderen Verbinders in ihrem Zwischenraum einschließt, dadurch gekennzeichnet, daß die vordere Verlängerung (40) an einem Körperabschnitt (38) des Elements (16), auf dem die erste flache Ausrichtfläche (46) derart geformt ist, daß sie sich über ein vorderes Ende der zweiten flachen Ausrichtfläche (24) hinauserstreckt, angeordnet ist, daß die vordere Verlängerung (40) dazu ausgebildet ist, mit der zweiten Ausrichtfläche (24) des anderen Verbinders (14) beim Zusammensteckeingriff in Eingriff zu treten, so daß die zweiten Ausrichtflächen (24) beider Verbinder (12, 14) beim Zusammensteckeingriff in coplanarer Beziehung stehen, daß die erste Ausrichtfläche (46) einen einstückigen Flächenabschnitt (46a) aufweist, der sich in geradliniger Weise auf der vorderen Verlängerung (40) erstreckt, um beim Zusammensticckeingriff mit den ersten und zweiten Ausrichtflächen (46, 24) des anderen Verbinders (14) zusammenzuwirken und einen dreieckigen Zwischenraum zu begrenzen, der die optische Faser des anderen Verbinders umschließt, daß an dem Verbinder (12) elastische Einrichtungen (70) derart angeordnet sind, daß sie mit dem anderen Verbinder (14) in Eingriff treten, um den verlängerten Oberflächenabschnitt (46a) der Verlängerung (40) des anderen Verbinders (14) auf die erste Ausrichtfläche (46) des Verbinders (12) hin vorzuspannen, um die optische Faser in dem dreieckigen Zwischenraum zwischen den ersten und zweiten Ausrichtflächen (24, 46) des Verbinders (12) und des verlängerten Oberflächenabschnitts (46a) der Verlängerung (40) des anderen Verbinders (14) klemmend zu ergreifen, daß ferner die erste Ausrichtfläche (46) an einer Ausnehmung (44) in dem Körperabschnitt (38) hinter dem verlängerten Oberflächenabschnitt (46a) geformt ist, so daß die Ausrichtfläche (46) eine geringere Breite aufweist als der verlängerte Oberflächenabschnitt (46a) der Verlängerung (40), und daß die Anordnung derart getroffen ist, daß während des Zusammensteckens mit dem anderen gleichen Verbinder (14) die verlängerten Oberflächenabschnitte (46a) der Verbinder in gleitendem Eingriff an Randteilen stehen, um die verlängerten Oberflächenabschnitte (46a) im Abstand zu den optischen Fasern (116) während im wesentlichen der gesamten längslaufenden Zusammensteckbewegung zu halten, bis die verlängerten Oberflächenabschnitte (46a) in die Ausnehmungen (44) an den Ausrichtflächen (46) der Verbinder eintreten.

2. Verbinder für eine optische Faser nach Anspruch 1, dadurch gekennzeichnet, daß der Verbinder (12) zusätzlich drei konvergierende Flächen (42, 24, 78) aufweist, die zwischen sich einen Aufnahmedurchgang für die optische Faser begrenzen, und zwar hinter den Ausrichtflächen (46, 24), welche einstückige geradlinige Verlängerungen der beiden den Durchgang begrenzenden Flächen (42, 24) sind.

3. Verbinder für eine optische Faser nach Anspruch 2, dadurch gekennzeichnet, daß die eine (78) der drei konvergierenden Flächen (42, 24, 78), welche den Aufnahmedurchgang für die optische Faser begrenzen, auf einem Klemmelement (18) vorgesehen ist, das an dem Körperelement (16) zur begrenzten seitlichen Bewegung der einen konvergierenden Fläche (78) relativ zu den beiden anderen konvergierenden Flächen (42, 24) angebracht ist, um die Querschnittsgröße des Durchgangs zu verändern.

4. Verbinder für eine optische Faser nach einem der vorhergehenden Ansprüche, dadurch gekennzeichnet, daß die elastischen Einrichtungen (70) einen elastischen Arm (70) umfassen, der sich von dem Körperabschnitt (16) in Längsrichtung und im seitlichen Abstand von den Ausrichtflächen (46, 24) wegerstreckt, sowie vorwärts der Ausrichtfläche (24), daß der Arm (70) Nockeneinrichtungen (74) aufweist, welche mit einer komplementären Oberfläche (52) auf der vorderen Verlängerung (40) des anderen Verbinders (14) während des Zusammensteckens in Eingriff treten können, um den anderen Verbinder (14) seitlich zu drücken, so daß die verlängerten Oberflächenabschnitte (46a) der Verlängerung (40) in Eingriff mit den optischen Fasern (116) gebracht werden, und zwar wenigstens am Ende der in Längsrichtung verlaufenden Zusammensteckbewegung, so daß die Achsen der optischen Fasern (116) präzise ausgerichtet werden.

FIG.1.

0015 657

FIG.2.

FIG.3.

2

FIG.4.

FIG.6.

FIG.8.

FIG.9.

FIG.5.

FIG.7.